# EUROPEAN PATENT SPECIFICATION

(11) **EP 1 541 340 B1**
(45) Date of publication and mention of the grant of the patent: **14.02.2007**
(21) Application number: 03078865.7
(22) Date of filing: 09.12.2003
(51) Int. Cl.: B32B 27/32, B65D 75/00

(54) **Migration-barrier retort laminates**
Autoklave Laminate mit Antimigrationsbarriereschicht
Stratifiés autoclavables avec barrière anti-migration

(43) Date of publication of application: 15.06.2005
(73) Proprietor: Amcor Flexibles Europe A/S, 8700 Horsens (DK)
(72) Inventor: Utz, Helmar, Dr., 3425 Koppigen (CH); Nagorski, Herbert, Dr., 47906 Kempen (DE)
(74) Representative: Lerho, Marc J. A.

(56) References cited:
- EP-A- 1 232 855
- US-A- 6 056 141

## Description

### Field of the invention

The present invention relates to retortable multilayer packaging films, and in particular to packaging laminates that are able to prevent the migration of discolouring substances which negatively affect white or light-coloured printing layers.

### State of the art

It is well known in the art that food and beverages are packed within packaging structures made of laminated multilayer films or sheets. There is a growing demand on barrier multilayer laminates for food packaging, and in particular for ready meals. Therefore, ready meals are typically packed in rigid, semi-rigid or flexible packaging such as stand-up pouches, the rigidity of the film depending on its thickness and composition.

Such products must look good in order to be attractive to the consumer. To achieve this, various product-related printings are typically applied. Generally, the printing has to be brilliant, glossy and comprises shiny white areas.

To those skilled in the art, it is known that, if the product is dark, even when using two layers of white ink, it shines through the laminate and heavily influences the appearance of the printing. The colours look grubby and the white colour looks greyish or coloured. To solve this problem, white films with high optical density (low light transmission) under the printing area are built into the laminates in order to get a shiny white printing.

Therefore, a typical laminate for packing ready meals consists of a reverse-printed, AlOx coated, bi-axially oriented polyester film, said film being adhesive-laminated to a bi-axially oriented polyamide film which is again adhesive-laminated to a white polypropylene film. Because of the double function of the white polypropylene film, which acts as an optical support for the printing and as a sealing layer, the printing has the required brilliant appearance. Unfortunately, if the product to be packed contains dyes, which is often the case for example in tomato products or with some spices, it can happen that the white sealing layer becomes stained during steam-sterilisation. Obviously, the discoloration has a very negative effect on the appearance of the printing.

In the past, this problem was typically solved by adjusting the retort conditions, e.g. by lowering the retort temperatures and by elongating the retort time, to a degree such that the discoloration is minimised to an acceptable degree or by changing the composition of the food.

On the other hand, a high demand on convenience resulted in developments allowing easy opening of the packs, for instance stand-up pouch. This is achieved by creating pre-opening means such as perforations on one of the multilayers of the laminates by means of a laser, by mechanically damaging with sand paper, particular treated rolls or even knives for instance. The weakening of the laminate allows easy tear behaviour. The disadvantage is that by damaging one of the multilayer components of the laminate, the barrier properties of the laminate are typically lowered. Adding an organic barrier layer as described in the present invention not only prevents the staining, but also compensates the barrier loss in the perforated areas thanks to the presence of the additional migration-barrier.

EP1232855 discloses a laminate film for a retortable pouch comprising a reverse-printed polyester layer, an adhesive layer, a nylon layer, an adhesive layer and a layer of heat-sealable polypropylene.

### Aims of the invention

The present invention aims to provide a cost-effective migration-barrier and gas-barrier multilayer film laminate in order to prevent the discoloration effects on the outside of those laminates that are caused by the packed product during the retort process.

### Summary of the invention

The present invention discloses a retortable migration and gas-barrier multilayer film laminate comprising:
a) a first multilayer structure comprising a reverse and/or a surface-printed carrier layer and a medium and/or high gas-barrier layer,
b) a second coextruded or laminated multilayer structure comprising a seal layer, at least one migration-barrier layer and/or at least one medium and/or a high gas-barrier layer, and one white or light-coloured layer
characterised in that
- said first multilayer is laminated on said second multilayer, and in that
- said migration-barrier layer is situated in between the white or light-coloured layer and a seal layer in order to avoid the migration of discolouring substances through said seal layer into the white layer.

According to a first aspect of the invention, the first and/or second multilayer film further comprises a tie layer, an adhesive layer, an intermediate layer and/or an ink layer.

According to a second aspect of the invention, said first or second multilayer film further comprises pre-opening means.

According to a third aspect of the invention, at least one of the layers of said multilayer film comprises an oxygen scavenger.

A further aspect of the invention is that the high gas-barrier layers are selected from the group consisting of oxides of aluminium, silicon, magnesium, cerium, hafnium, tantalum, titanium, yttrium, zirconium, carbon layers, crosslinked polyacrylates, crosslinked PVOH or EVOH, PVDC, liquid crystal polymers, polyamide MXD-6 water glass.

Additionally, in the present invention, the medium gas-barrier layer are selected from the group consisting of organic coatings, oriented polyester, oriented polyamide, PVDC copolymers and PAN.

In an additional aspect of the invention, the printable carrier layer is selected from the group consisting of polyester, polyamide, polypropylen, polycarbonat and their co-polymers.

In a further aspect of the invention the migration-barrier layer is selected from the group consisting of EVOH, ethylene-vinylalcohol co-polymers, polyamides, amorphous polyamides, polyesters and liquid crystal polymers.

In another aspect of the invention, the seal layer is selected from the group consisting of heat-sealable polyesters, polyolefins and their copolymers.

In a first embodiment of the invention, the first multilayer structure is a ceramic layer of AlOₓ and/or SiOₓ of about 5 to 100nm on a PETP carrier layer of about 6 to 36µ optionally top-coated with an organic protective layer on said ceramic layer.

In a second embodiment of the invention, the second multilayer structure comprises as migration-barrier layer an EVOH layer of 3 to 10µ situated in between an white or light-coloured layer of polypropylene of 10 to 80µ and a seal layer of polypropylene of 20 to 150µ.

In a particular embodiment of the invention, the second multilayer is a PP/tie/EVOH/tie/PP//PP/tie/EVOH/tie/PP structure obtainable by a blocked bubble film or swim film process.

In a general aspect, the invention includes packaging containing the multilayer laminate of Claim 1 and their use for food applications.

### Short description of the drawings

Fig.1 represents a PETP-AlOx/ink/adhesive/OPA/adhesive coex PP white/tie/EVOH/ tie/PP.

Fig.2 represents a PETP-AlOx/adhesive/ink/OPA/adhesive coex PP white/tie/EVOH/tie/PP.

Fig.3 represents a PETP-SiOx/ink/adhesive/coex PP white/tie/EVOH/tie/PP.

Fig.4 represents a PETP/ink/adhesive/SiOx-PETP/adhesive/coex PP white/tie/EVOH/tie/PP.

Fig.5 represents a 5-ply blocked bubble film: PETP-AlOx ink/adhesive/coex PP white/tie/EVOH/tie/PP//PP/tie/EVOH/tie/PP white.

### Detailed description of the invention

The problem to be solved by the present invention is to prevent the staining of a white or light-coloured layer under a printing in order to enhance the appearance of the printing after the retort process.

Surprisingly, it was found that a very thin EVOH polymer layer of e.g. 5µ placed in the laminate between the product and a white polymer layer prevents the migration of discolouring substances from the product into the white layer. Non-restrictive examples of such discolouring substances are Capsanthin, Capsorubin, Crocin Curcumin or Lycopin.

Therefore, in a laminate comprising a reverse-printed AlOx-coated bi-axially oriented polyester film laminated to a bi-axially oriented polyamide film which (for improved mechanical properties) and further laminated to a co-extruded film white polypropylene/tie/EVOH/tie polypropylene, the white polypropylene does not discolour if for example tomato-based products are steam-sterilised in this laminate packed.

It was additionally found that a similar effect can be achieved by using polyamide instead of EVOH.

If the requirements on the mechanical properties of the laminate are not too high in terms of puncture resistance, seal strength or drop resistance of the pouch, a 2-ply version without the bi-axially oriented polyamide layer can be used. To improve the gas-barrier properties of the laminates according to the present invention, so-called barrier adhesives that are well known by those skilled in the art, can be used instead of the typical polyurethane-based adhesives.

The principle of implementing a layer in order to prevent the migration of discolouring substances to a white layer can be used in any retort stable laminate.

In the present invention, high gas-barrier layer should be understood as a layer that shows low gas transmission rates e.g. for oxygen of less than 10cm³ (m² d bar), medium gas-barrier layer should be understood as a layer that shows gas transmission rates, e.g. for oxygen, between 10 and 100cm³(m² d bar). Migration-barrier layer should be understood as a layer that prevents or minimises the migration of organic substances like dyes, flavours or fragrances.

### Description of preferred embodiments of the invention

### Examples of applications

### c) Example 1

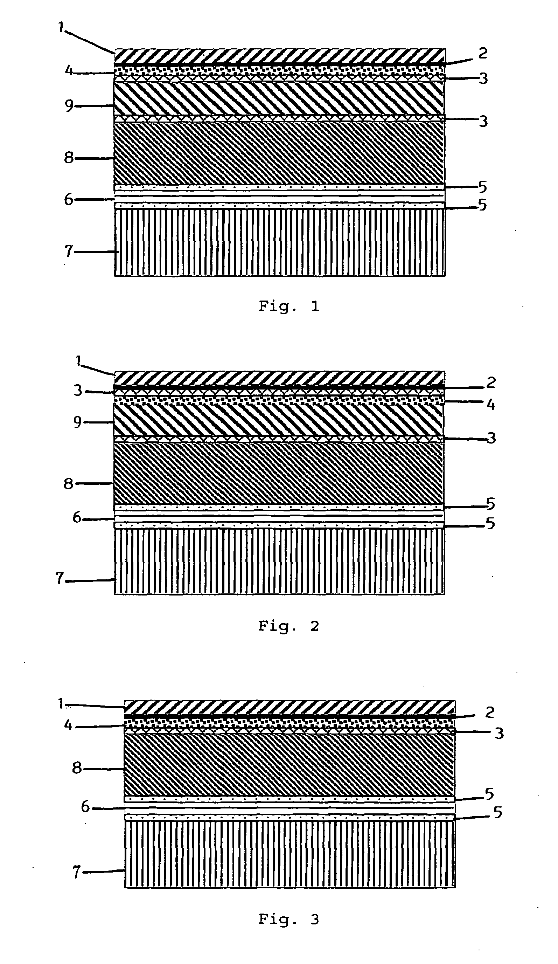

A bi-axially oriented polyester film (12µ) with an AlOx barrier coating (e.g Toppan®GL-AEH) is reverse-printed and adhesive-laminated on a bi-axially oriented polyamide film (15µ, e.g. Biaxis®ST). An additional 100µ-thick coextruded blown film with the structure PP white/tie/EVOH/tie/PP is adhesive-laminated on the OPA side (see Fig.1). The laminated side of the coex film is white-pigmented, the EVOH layer is 5 µ thick. After steam-sterilisation of a pouch made from this laminate that was filled with a tomato-based sauce, the white CPP layer remains white.

### Example 2

A bi-axially oriented polyamide film (15µ, e.g. Biaxis®ST) is surface-printed and adhesive-laminated on the coated side of a bi-axially oriented polyester film (12µ) with an AlOx barrier coating (e.g Toppan®GL-AEH). An additional 100µ-thick coextruded blown film with the structure PP white/tie/EVOH/tie/PP is adhesive-laminated to the OPA side (see Fig.2). The laminated side of the coex film is white-pigmented, the EVOH layer is 5µ-thick. After steam-sterilisation of a pouch made from this laminate that was filled with a tomato-based sauce, the white CPP layer remains white.

### Example 3

A bi-axially oriented polyester film (12µ) with an SiOx barrier coating (e.g Techbarrier®L) is reverse-printed and adhesive-laminated to a 100µ-thick coextruded blown film with the structure PP white/tie/EVOH/tie/PP (see Fig. 3). The laminated side of the coex film is white-pigmented, the EVOH layer is 5µ-thick. After steam-sterilisation of a pouch made from this laminate that was filled with a tomato-based sauce, the white CPP layer remains white.

### Example 4

A bi-axially oriented polyester film (12µ) with an SiOx barrier coating (e.g Techbarrier®L) is reverse-printed and adhesive-laminated to a 100µ-thick coextruded blown film with the structure PP white/tie/PA/tie/PP (see Fig.3). The laminated side of the coex film is white-pigmented, the PA layer is 15µ-thick. After steam-sterilisation of a pouch made from this laminate that was filled with a tomato-based sauce, the white CPP layer remains white.

### Example 5

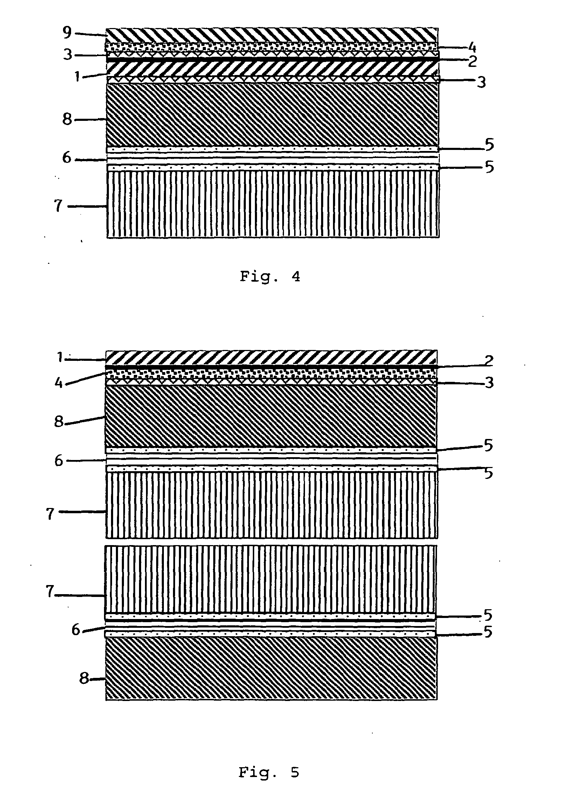

A bi-axially oriented polyester film (12µ, e.g. Hostaphane®RNK) is reverse-printed and adhesive-laminated to the coated side of a bi-axially oriented polyester film (12µ) with an SiOx barrier coating (e.g Ceramis CTXA). An additional 100µ-thick coextruded blown film with the structure PP white/tie/EVOH/tie/PP is adhesive-laminated to the non-coated polyester film side (see Fig.4). The laminated side of the coex film is white-pigmented, the EVOH layer is 5µ-thick. After steam-sterilisation of a pouch made from this laminate that was filled with a tomato-based sauce, the white CPP layer remains white.

### Example 6

A bi-axially oriented polyester film (12µ) with an AlOx barrier coating (e.g Toppan®GL-AEH) is reverse-printed and adhesive-laminated to a 100µ-thick coextruded blown film of the "Blockschlauch" type with the structure PP white/tie/EVOH/tie//tie/EVOH/tie/PP white (see Fig.5). The laminated and the sealing side of the coex film is white-pigmented, each EVOH layers is 3µ-thick. After steam-sterilisation of a pouch made from this laminate that was filled with a tomato-based sauce, the white CPP-layer that is laminated to the printed film remains white.

### Legend

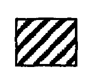 1. carrier layer (PETP, PET, PEN, PA, ...)
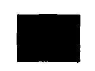 2. gas-barrier layer (ceramic or organic coating)
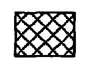 3. adhesive
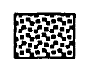 4. printing
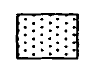 5. tie layer
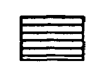 6. migration-barrier layer (EVOH, PA, ...)
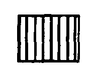 7. seal layer (PP, PE, amorphous polyester, ...)
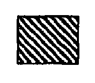 8. white or light-coloured layer (polyolefine, ...)
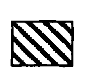 9. intermediate layer (PA, PETP, ...)

## Claims

1. Retortable migration and gas-barrier multilayer film laminate comprising:
a) a first multilayer structure comprising a reverse and/or a surface-printed carrier layer (1) and a medium and/or high gas-barrier layer (2),
b) a second coextruded or laminated multilayer structure comprising a seal layer (7), at least one migration-barrier layer (6) and one white layer (8),
said migration barrier layer being selected from the group consisting of EVOH, ethylene-vinylalcohol co-polymers, polyamides, polyesters and liquid crystal polymers, **characterised in that**
- said first multilayer is laminated on said second multilayer, and **in that**
- said migration-barrier layer (6) is situated in between the white layer (8) and a seal layer (7) in order to avoid the migration of discolouring substances through said seal layer (7) into the white layer.

2. Retortable migration-barrier multilayer film according to Claim 1, **characterised in that** said first and/or second multilayer film further comprises a tie layer (5), an adhesive layer (3), an intermediate layer (8) and/or an ink layer.

3. Retortable migration-barrier multilayer film according to Claim 1, **characterised in that** said first or second multilayer film further comprises pre-opening means.

4. Retortable gas-barrier multilayer film according to Claim 1, **characterised in that** at least one of the layers of said multilayer film comprises an oxygen scavenger.

5. Retortable migration and gas-barrier multilayer film according to Claim 1, **characterised in that** the high gas-barrier layers are selected from the group consisting of oxides of aluminium, silicon, magnesium, cerium, hafnium, tantalum, titanium, yttrium, zirconium, carbon layers, crosslinked polyacrylates, crosslinked PVOH or EVOH, PVDC, liquid crystal polymers, polyamide MXD-6 water glass.

6. Retortable migration and gas-barrier multilayer film according to Claim 1, **characterised in that** the medium gas-barrier layer are selected from the group consisting of organic coatings, oriented polyester, oriented polyamide, PVDC copolymers and PAN.

7. Retortable gas-barrier multilayer film according to Claim 1, **characterised in that** the printable carrier layer (1) is selected from the group consisting of polyester, polyamide, polypropylen, polycarbonat and their co-polymers.

8. Retortable migration and gas-barrier multilayer film according to Claim 1, **characterised in that** the seal layer (7) is selected from the group consisting of heat-sealable polyesters, polyolefins and their copolymers.

9. Retortable migration and gas-barrier multilayer film according to any of the previous claims, **characterised in that** the first multilayer structure is a ceramic layer of AlOₓ and/or SiOₓ of about 5 to 100nm on a PETP carrier layer of about 6 to 36µ optionally top-coated with an organic protective layer on said ceramic layer.

10. Retortable migration and gas-barrier multilayer film according to any of the previous claims, **characterised in that** the second multilayer structure comprises as migration-barrier layer (6), an EVOH layer of 3 to 10µ situated in between a white or light-coloured layer of polypropylene (8) of 10 to 80µ and a seal layer (7) of polypropylene of 20 to 150µ.

11. Retortable migration and gas-barrier multilayer film according to any of the previous claims, **characterised in that** the second multilayer is a PP/tie/ EVOH/tie/PP//PP/tie/EVOH/tie/PP structure obtainable by a blocked bubble film or swim film process.

12. Packaging containing the multilayer laminate of Claim 1.

13. Use of a gas-barrier multilayer film as in Claim 1 for food applications.

## Patentansprüche

1. Sterilisierbares migrationsbeständiges und gasdichtes Mehrschicht-Folienlaminat, bestehend aus:
a) einer ersten Mehrschichtstruktur, bestehend aus einer rückseitig und/oder auf der Oberfläche bedruckten Trägerschicht (1) und einem Medium und/oder einer stark gasdichten Schicht (2),
b) einer zweiten gemeinsam stranggepressten oder laminierten Mehrschichtstruktur, die eine Versiegelungsschicht (7), mindestens eine migrationsbeständige Schicht (6) sowie eine weiße Schicht enthält;
Die besagte migrationsbeständige Schicht wird aus einer aus EVOH, Ethylenvinylalkohol Copolymeren, Polyamiden, Polyestern und Flüssigkristall-Polymeren bestehenden Gruppe ausgewählt und ist **dadurch gekennzeichnet, dass**
- die besagte erste Mehrfachschicht auf die besagte zweite Mehrfachschicht laminiert wird, sowie **dadurch**, dass
- die besagte migrationsbeständige Schicht (6) zwischen der weißen Schicht (8) und der Versiegelungsschicht (7) angeordnet ist, um die Migration von entfärbenden Substanzen durch die besagte Schicht (7) in die weiße Schicht zu verhindern.

2. Eine sterilisierbare, migrationsbeständige Mehrschichtfolie gemäß Anspruch 1, **dadurch gekennzeichnet, dass** die besagte erste und/oder zweite Mehrschichtfolie ferner eine Bindeschicht (5), eine Haftschicht (3) eine Zwischenschicht (8) und/oder eine Tintenschicht umfasst.

3. Eine sterilisierbare, migrationsbeständige Mehrschichtfolie gemäß Anspruch 1, **dadurch gekennzeichnet, dass** die besagte erste und/oder zweite Mehrschichtfolie ferner ein Hilfsmittel für das Öffnen umfasst.

4. Eine sterilisierbare, gasdichte Mehrschichtfolie gemäß Anspruch 1, **dadurch gekennzeichnet, dass** mindestens eine der Schichten besagter Mehrschichtfolie einen Sauerstoff-Scavenger umfasst.

5. Eine sterilisierbare, migrationsbeständige und gasdichte Mehrschichtfolie gemäß Anspruch 1, **dadurch gekennzeichnet, dass** die stark gasdichten Schichten aus der Gruppe ausgewählt werden, die aus Oxiden von Aluminium, Silizium, Magnesium, Cer, Hafnium, Tantal, Titan, Yttrium, Zirkonium, Kohlenstoffschichten, quervernetzten Polyacrylaten, quervernetzten PVOH oder EVOH, PVDC, Flüssigkristallpolymeren, Polyamid MXD-6 Wasserglas besteht.

6. Eine sterilisierbare, migrationsbeständige und gasdichte Mehrschichtfolie gemäß Anspruch 1, **dadurch gekennzeichnet, dass** die mittlere gasdichte Schicht aus der aus organischen Beschichtungen, orientiertem Polyester, orientiertem Polyamid, PVDC Copolymeren und PAN bestehenden Gruppe ausgewählt wird.

7. Eine sterilisierbare, gasdichte Mehrschichtfolie gemäß Anspruch 1, **dadurch gekennzeichnet, dass** die bedruckbare Trägerschicht (1) aus der Gruppe ausgewählt wird, die aus Polyester, Polyamid, Polypropylen, Polycarbonat und ihren Copolymeren besteht.

8. Eine sterilisierbare, migrationsbeständige und gasdichte Mehrschichtfolie gemäß Anspruch 1, **dadurch gekennzeichnet, dass** die Versiegelungsschicht (7) aus der Gruppe ausgewählt wird, die aus heißversiegelbaren Polyestern, Polyolifinen und ihren Copolymeren besteht.

9. Eine sterilisierbare, migrationsbeständige und gasdichte Mehrschichtfolie gemäß den vorherigen Ansprüchen, **dadurch gekennzeichnet, dass** die erste Mehrschichtstruktur aus einer Keramikschicht aus AlOₓ und / oder SiOₓ von 5 bis 100 nm auf einer PETP-Trägerschicht von ca. 6 bis 36 µ besteht und optional auf der Oberseite besagter Keramikschicht mit einer organischen Schutzschicht beschichtet ist.

10. Eine sterilisierbare, migrationsbeständige und gasdichte Mehrschichtfolie gemäß den vorherigen Ansprüchen, **dadurch gekennzeichnet, dass** die zweite Mehrschichtstruktur eine migrationsbeständige Schicht (6), eine EVOH-Schicht von 3 bis 10 µ umfasst, die zwischen einer weißen oder hellen Schicht aus Polypropylen (8) von 10 bis 80 µ und einer Versiegelungsschicht (7) aus Polypropylen von 20 bis 150 µ angeordnet ist.

11. Eine sterilisierbare, migrationsbeständige und gasdichte Mehrschichtfolie gemäß den vorherigen Ansprüchen, **dadurch gekennzeichnet, dass** es sich bei der zweiten Mehrfachschicht um eine PP-/Bindungs-/EVOH-/Bindungs-/PP-/PP-/Bindungs-/EVOH-/Bindungs-/PP-Struktur handelt, die durch ein blockiertes Luftblasenfolien- oder Schwimmfolienverfahren erhalten werden.

12. Eine Verpackung, die das Mehrschichtlaminat gemäß Anspruch 1 enthält.

13. Die Verwendung der gasdichten Mehrschichtfolie gemäß Anspruch 1 für Lebensmittelanwendungen.

## Revendications

1. Stratifié de film multicouche stérilisable à barrière contre les gaz et les migrations comprenant :
a) une première structure multicouche comprenant une couche (1) de support imprimée en surface et/ou au verso et une couche (2) à barrière moyenne et/ou élevée contre les gaz,
b) une seconde structure multicouche stratifiée ou coextrudée comprenant une couche de scellage (7), au moins une couche à barrière contre les migrations (6) et une couche blanche (8),
ladite couche à barrière contre les migrations étant sélectionnée parmi le groupe constitué par les EVOH, les copolymères d'éthylène-glycol vinylique, les polyamides, les polyesters et les polymères liquides cristallins, **caractérisé en ce que** :
- ladite première multicouche est laminée sur ladite seconde multicouche, et **en ce que**
- ladite couche à barrière contre les migrations (6) est située entre la couche blanche (8) et une couche de scellage (7) de manière à éviter la migration de substances décolorantes à travers ladite couche de scellage (7) dans la couche blanche.

2. Stratifié de film multicouche stérilisable à barrière contre les migrations selon la revendication 1, **caractérisé en ce que** ledit premier film et/ou ledit second film multicouche comprend également une couche de liaison (5), une couche adhésive (3), une couche intermédiaire (8) et/ou une couche d'encre.

3. Stratifié de film multicouche stérilisable à barrière contre les migrations selon la revendication 1, **caractérisé en ce que** ledit premier ou second film multicouche comprend également des moyens de pré-ouverture.

4. Stratifié de film multicouche stérilisable à barrière contre les gaz selon la revendication 1, **caractérisé en ce qu'**au moins l'une des couches dudit film multicouche comprend un capteur d'oxygène.

5. Stratifié de film multicouche stérilisable à barrière contre les gaz et contre les migrations selon la revendication 1, **caractérisé en ce que** les couches à barrière élevée contre les gaz sont sélectionnées parmi le groupe constitué par les oxydes d'aluminium, silicium, magnésium, cérium, hafnium, tantale, titane, yttrium, zirconium, les couches de carbone, les polyacrylates réticulés, les PVOH ou les EVOH réticulés, les PVDC, les polymères liquides cristallins, le polyamide MXD-6 et le verre liquide.

6. Stratifié de film multicouche stérilisable à barrière contre les gaz et contre les migrations selon la revendication 1, **caractérisé en ce que** les couches à barrière moyenne contre les gaz sont sélectionnées parmi le groupe constitué par les revêtements organiques, les polyesters orientés, les polyamides orientés, les copolymères de PVDC et les poly-acrylonitriles.

7. Stratifié de film multicouche stérilisable à barrière contre les gaz selon la revendication 1, **caractérisé en ce que** la couche de support (1) imprimable est sélectionnée parmi le groupe constitué par les polyesters, les polyamides, les polypropylènes, les polycarbonates et leurs copolymères.

8. Stratifié de film multicouche stérilisable à barrière contre les gaz et contre les migrations selon la revendication 1, **caractérisé en ce que** la couche de scellage (7) est sélectionnée parmi le groupe constitué par les polyesters thermosoudables, les polyoléfines et leurs copolymères.

9. Stratifié de film multicouche stérilisable à barrière contre les gaz et contre les migrations selon l'une quelconque des revendications précédentes, **caractérisé en ce que** la première structure multicouche est une couche céramique d'AlOₓ et/ou de SiOₓ d'environ 5 à 100 nm sur une couche de support en PETP d'environ 6 à 36 *µ*, optionnellement revêtue d'une couche organique de protection sur ladite couche en céramique.

10. Stratifié de film multicouche stérilisable à barrière contre les gaz et contre les migrations selon l'une quelconque des revendications précédentes, **caractérisé en ce que** la seconde structure multicouche comprend une couche à barrière contre les migrations (6), une couche d'EVOH de 3 à 10 *µ* située entre une couche de polypropylène blanche ou de couleur claire (8) de 10 à 80 *µ* et une couche de scellage (7) de polypropylène de 20 à 150 *µ*.

11. Stratifié de film multicouche stérilisable à barrière contre les gaz et contre les migration selon l'une quelconque des revendications précédentes, **caractérisé en ce que** la seconde multicouche est une structure PP/liaison/EVOH/liaison/PP//PP/liaison/EVOH/ liaison/PP qui peut être obtenue par un procédé de film en gaine bloqué ou de film flottant.

12. Emballage comprenant le stratifié multicouche selon la revendication 1.

13. Utilisation d'un film multicouche à barrière contre les gaz selon la revendication 1 pour des applications alimentaires.
